# EUROPÄISCHE PATENTSCHRIFT

(11) **EP 2 135 436 B1**
(45) Veröffentlichungstag und Bekanntmachung des Hinweises auf die Patenterteilung: **07.03.2018**
(21) Anmeldenummer: 07821811.2
(22) Anmeldetag: 25.10.2007
(51) Int. Cl.: H04M 3/42, H04M 3/493, H04M 7/00

(54) **VERBINDUNGSAUFBAU ÜBER EIN KOMMUNIKATIONSNETZ ZU EINEM TEILNEHMER EINER BESPRECHUNG OHNE DASS DESSEN RUFNUMMER BEKANNT IST**
ESTABLISHMENT OF CONNECTIONS OVER A COMMUNICATION NETWORK TO A PARTICIPANT OF A MEETING WITHOUT SAID PARTICIPANT'S TELEPHONE NUMBER BEING KNOWN
PROCÉDÉ PERMETTANT D'ÉTABLIR UNE LIAISON AVEC UN PARTICIPANT À UNE CONVERSATION, PAR LE BIAIS D'UN RÉSEAU DE COMMUNICATION, SANS CONNAÎTRE SON NUMÉRO DE TÉLÉPHONE

(30) Priorität: 14.03.2007 DE 102007012339
(43) Veröffentlichungstag der Anmeldung: 23.12.2009
(73) Patentinhaber: Unify GmbH & Co. KG, 80807 München (DE)
(72) Erfinder: LEDERER, Thomas, 82211 Herrsching (DE)
(74) Vertreter: Fritzsche, Thomas
(86) Internationale Anmeldenummer: PCT/EP2007/061448
(87) Internationale Veröffentlichungsnummer: WO 2008/110220

(56) Entgegenhaltungen:
- EP-A- 0 954 193
- US-A- 6 058 415
- US-A1- 2005 185 786
- "Lotus C++ API Toolkit 3.0 User's Guide - calendars"[Online] 15. August 2005 (2005-08-15), XP002467704 Gefunden im Internet: URL:http://www.ibm.com/developerworks/lotu s/documentation/c++api/> [gefunden am 2008-02-05]

## Beschreibung

Verfahren und Kommunikationssystem zum automatischen Vermitteln einer Verbindung zu einem Teilnehmer eines terminierten Treffens über zumindest ein Kommunikationsnetz

Terminierte Treffen, insbesondere Besprechungen oder Konferenzen in Unternehmen, werden häufig durch einen Organisator organisiert. Der Organisator einer Besprechung oder Konferenz ermittelt die Teilnehmer der Besprechung, erstellt und versendet Einladungen, hat in der Regel Information über die Teilnehmerverfügbarkeit und organisiert den Termin und den Standort der Besprechung bzw. Konferenz. Dieser Organisator verfügt somit über alle Informationen des Treffens und kann auch alle Teilnehmer des Treffens über etwaige Änderungen des Organisationsablaufs informieren, z.B. Termin des Treffens, Ort des Treffens, Teilnehmer des Treffens, Thema des Treffens usw. Des Weiteren finden die Treffen bzw. Besprechungen häufig an Standorten bzw. Gebäuden statt, zu denen die Teilnehmer erst anreisen müssen.

Es kann vorkommen, dass sich der Teilnehmer des Treffens aufgrund der Verkehrssituation bei der Anreise verspätet oder den exakten Termin oder den genauen Veranstaltungsort wie beispielsweise exakte Gebäude- und/oder Raumbezeichnung nicht mehr weiß. In dieser Situation möchte dieser Teilnehmer den Organisator des Treffens bzw. der Besprechung über die Verspätung informieren oder sich über die vergessenen Daten der Besprechung informieren. Ist nun in dieser Situation die Rufnummer des Organisators beispielsweise in einem mitgeführten mobilen Endgerät nicht verfügbar, verliert man Zeit und bedeutet einen erheblichen gerätetechnischen Aufwand, um die Rufnummer des mobilen oder drahtgebundenen Endgeräts des Organisators oder eines weiteren Teilnehmers der Besprechung zu ermitteln. Mögliche Vorgehensweise zur Informationsübermittlung an die Teilnehmer der Besprechung sind beispielsweise Anruf bei einer bekannten Person, die sich in der Nähe der Besprechung aufhält, mit der Bitte die Teilnehmer zu informieren, oder Anruf bei einer Telefonzentrale, um die Rufnummer des Organisators zu notieren oder Suchen der Rufnummer des Organisators im elektronischen Terminkalender (meist jedoch nicht vorhanden).

In US 2005/185786 A1 ist ein persönliches Assistenzsystem beschrieben für einen Benutzer eines Telefons, umfassend eine erste Datenbank, wobei die erste Datenbank eine Kontaktlistefür den Benutzer aufweist. Die Kontaktliste kann einen Kontaktnamen und eine entsprechende Kontaktnummer einschließen und schließt die elektronische Handelsinformation des Benutzers mit ein. In US 6,058,415 ist ein System und Verfahren zur Bereitstellung von Datenkommunikation zwischen einem Informationssystem, wie einem LAN, und einem Kommunikationssystem, wie einer PBX, die unter Kontrolle eines automatischen Rufweiterleitungssystems betrieben wird, beschrieben. Daten des Angerufenen gemäß einem besonderen Plan von LAN-Benutzern, wie dieser in einer elektronischen Kalenderapplikation wiedergegeben ist, können verwendet werden, um Anrufe in geeigneter Weise via dem automatischen Rufweiterleitungssystem weiterzuleiten.

Die der Erfindung zugrunde liegende Aufgabe besteht darin, die Übermittlung von Information zwischen Teilnehmern eines Treffens in besonderen Situationen einzelner Teilnehmer zu verbessern. Die Aufgabe wird durch die Merkmale der Ansprüche 1 und 12 gelöst.

Ein wesentlicher Aspekt des erfindungsgemäßen Verfahrens ist darin zu sehen, dass eine Zuordnung der Identität bzw. Rufinformation von Endgeräten des Kommunikationsnetzes zu endgerätespezifischer Personeninformation und von dieser zu einer terminspezifischen Information und Identität über Teilnehmer eines Treffens gespeichert werden. Von einem Endgerät wird mit einer vorgegebenen Identität eine Verbindung zum Kommunikationsnetz aufgebaut, in dem die Identifikation des Endgeräts ermittelt wird. Mit Hilfe der ermittelten Identität des Endgeräts und der gespeicherten Information wird die Identität des Teilnehmers des Treffens ermittelt und mit Hilfe der ermittelten Identität wird die Verbindung vom Endgerät zum Endgerät des Teilnehmers des Treffens weitergeleitet.

Ein wesentlicher Vorteil der Erfindung ist darin zu sehen, dass mit Hilfe des erfindungsgemäßen Verfahrens ein Unternehmen eine zentrale Identität bzw. Rufnummer einrichten kann, die es Mitarbeitern des Unternehmens ermöglicht, über die zentrale Rufnummer von ihrem mobilen Endgerät EG oder drahtgebundenen Endgerät EG am Arbeitsplatz auf einfache Weise den Organisator oder einen Teilnehmer T eines Treffens oder einer Besprechung zu erreichen, um über eine Verspätung zu informieren oder die Besprechung kurzfristig abzusagen oder zu verschieben oder besprechungsspezifische Information, wie exakter Termin oder exakte Standortangaben wie Gebäude- oder Raumnummer abzufragen. Durch das automatische Ermitteln des Organisators oder eines Teilnehmers einer Besprechung wird zum einen eine erhebliche Zeitersparnis bewirkt und zum anderen ein erforderlicher gerätetechnischer Aufwand zum Erreichen des Organisators oder eines Teilnehmers einer Besprechung vermieden.

Weitere vorteilhafte Weiterbildungen des erfindungsgemäßen Verfahrens und eine Ausgestaltung eines erfindungsgemäßen Kommunikationssystems sind den weiteren Ansprüchen zu entnehmen.

Im Folgenden werden die Erfindung und deren Weiterbildungen anhand zweier zeichnerischen Darstellungen erläutert. Dabei zeigen
- Figur 1: eine schematische Darstellung einer Kommunikations-systems zur Realisierung des erfindungsgemäßen Verfahrens und
- Figur 2: anhand eines Ablaufdiagramm das erfindungsgemäße Verfahren.

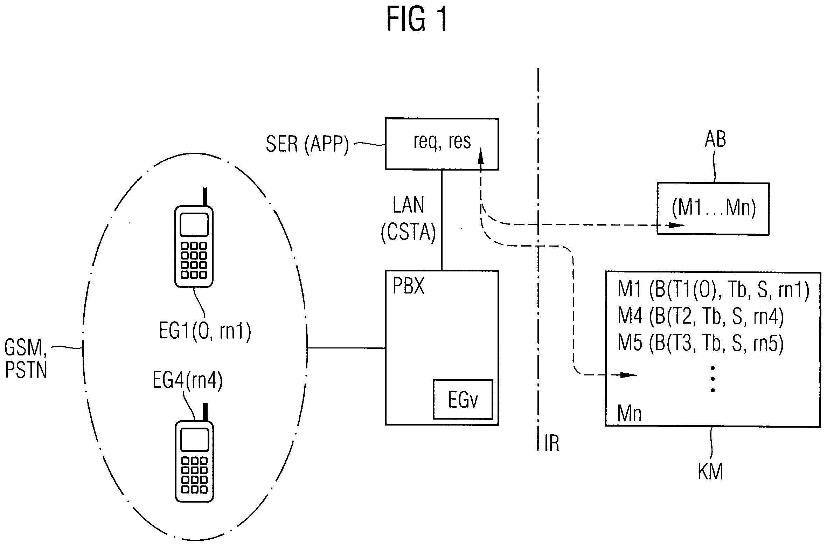

Figur 1 zeigt ein Kommunikationssystem mit einer Vermittlungseinrichtung PBX, das an ein drahtgebundenes Kommunikationsnetz PSTN und/oder an ein Mobilfunknetz GSM angeschlossen ist - in der Figur 1 durch ein einziges mit GSM, PSTN bezeichnetes, strichpunktiertes Oval dargestellt. In der Vermittlungseinrichtung PBX ist ein virtuelles Endgerät EGv realisiert, dem ein zentrale Rufnummer rnv zugeordnet ist.

Mit der Vermittlungseinrichtung PBX ist über eine CSTA-Schnittstelle (Computer Supported Telecommunications Application) eine Applikation AAP verbunden, wobei die Applikation APP im Ausführungsbeispiel in einem Server SER realisiert ist. Mit Hilfe der CSTA- Protokoll-Schnittstelle CSTA - standardisiert bei ECMA - wird der computergesteuerte Server SER mit einer Vermittlungseinrichtung PBX gekoppelt, um leistungsmerkbezogene Applikationen zu steuern. Als Beispiele für die standardkonforme Umsetzung ist beispielsweise die Programmierschnittstelle TAPI vorgesehen, die auf den CSTA- Definitionen aufbaut. Physikalisch ist der Server SER beispielsweise über ein lokales.Netzwerk LAN an die Vermittlungseinrichtung PBX angeschlossen.

Mit Hilfe der Applikation APP kann über ein unternehmensinternes Netz, insbesondere ein Intranet IR, auf ein Adress- bzw. Telefonbuch AB zugegriffen werden, wobei der Zugriff physikalisch über das LAN und über eine nicht dargestellte Übergangseinrichtung erfolgen kann - in Figur 1 durch eine mit IR bezeichnete, strichpunktierte Linie angedeutet. Das Adress- bzw. Telefonbuch AB ist meist für die Mitarbeiter eines Unternehmens in einem speziellen Server - nicht dargestellt - realisiert, der über das Intranet IR kontaktiert werden kann. Aktiviert wird die Applikation APP durch eine Informationsübermittlung von dem virtuellen Endgerät EGv der Vermittlungseinrichtung PBX. Alternativ ist die Applikation APP ständig aktiv und beobachtet das virtuelle Endgerät EGv hinsichtlich einer Informationsübermittlung.

In Figur 1 ist weiterhin ein Kalendermodul KM dargestellt, in dem alle Termine T der Mitarbeiter M1..Mn eines Unternehmens registriert werden. Das Kalendermodul kann beispielsweise durch einen elektronischen Kalender realisiert werden, in den die Mitarbeiter M1..Mn ihre Termine T eintragen oder automatisch bei Eintrag in einen windowskonformen Outlook-Kalender erfasst und eingetragen werden. Für das Ausführungsbeispiel sei angenommen, dass eine Besprechung B an einem Termin Tb an einem Standort S - einschließlich Gebäude- und Raumnummer - mit 3 Teilnehmern T1..T3 eingetragen ist, wobei die Teilnehmer T1..T3 der registrierte erste, vierte und fünfte Mitarbeiter M1,M4,M5 und der Organisator O der Besprechung B der erste Teilnehmer T1 der Besprechung B bzw. der erste Mitarbeiter M1 des Unternehmens ist.

Eine Realisierung ist wiederum in einem Server - nicht dargestellt möglich -, wobei das Adress- bzw. Telefonbuch AB zusammen mit dem Kalendermodul KM in einem Server realisiert sein können. Angesteuert wird das Kalendermodul KM wiederum über das Intranet IR des Unternehmens bzw. das lokale Netzwerk LAN und über eine Übergangseinrichtung - in Figur 1 durch eine mit IR bezeichnete, strichpunktierte Linie angedeutet.

Für das Ausführungsbeispiel sei weiterhin angenommen, dass der zweite Teilnehmer T2 zur Besprechung B anreisen muss, da der Standort S der Besprechung B nicht im Bereich seines Arbeitsplatzes liegt. Die Anreise erfolgt beispielsweise per Öffentlicher Verkehrsmittel und ist aufgrund einer Störung des Verkehrsmittels unterbrochen. Teilnehmer T2 will daher den Organisator O der Besprechung B über die Verspätung informieren. Zusätzlich ist dem zweiten Teilnehmer T2 der exakte Standort S der Besprechung B, beispielsweise die Raum- und Gebäudenummer entfallen und er möchte im Sinne einer Auskunft über den exakten Standort S zusätzlich den Organisator O der Besprechung B erreichen. Da er zwar ein mobiles Endgerät EG2 mitführt, jedoch die Rufnummer rn1 des Organisators O nicht gespeichert ist, wird er trotzdem mit Hilfe des erfindungsgemäßen Verfahrens den Organisator 0 der Besprechung B umgehend erreichen.

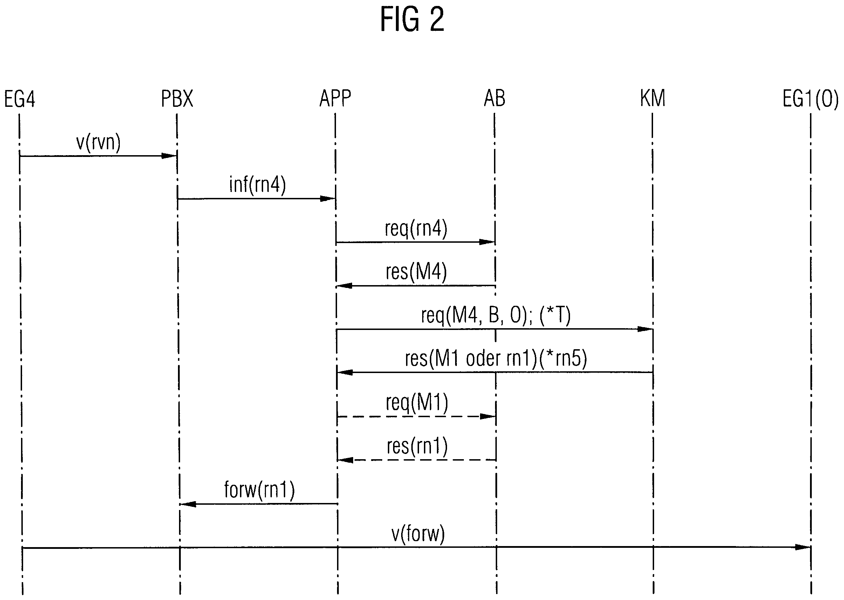

Das erfindungsgemäße Verfahren wird anhand des in Figur 2 dargestellten Ablaufdiagramms und des Kommunikationssystems in Figur 1 erläutert. In der Figur 2 sind die Komponenten wie Endgerät EG4 des vierten Mitarbeiters M4, der Vermittlungseinrichtung PBX, der Applikation APP, des Adress- bzw. Telefonbuchs AB, das Kalendermodul KM und das Endgerät EG1 des ersten Mitarbeiters M1 des Kommunikationssystems jeweils durch senkrechte strichpunktierte Linie repräsentiert.

Erfindungsgemäß wird mit dem Endgerät EG4 des vierten Mitarbeiters M4 bzw. des zweiten Teilnehmers T2 der Besprechung B unter Verwendung der zentralen Rufnummer rnv eine Verbindung v zum virtuellen Endgerät EGv der Vermittlungseinrichtung PBX aufgebaut und gehalten - in Figur 2 durch einen mit v(rnv) bezeichneten Pfeil angedeutet. Von dem virtuellen Endgerät EGv wird über die CSTA- Schnittstelle CSTA eine Information inf mit der Rufnummer rn4 des die Verbindung v aufbauenden Endgeräts EG4 an die Applikation APP übermittelt. Die Rufnummer rn4 des Endgeräts EG4 wird durch die Vermittlungseinrichtung PBX im Rahmen des Verbindungsaufbaus ermittelt und dem virtuellen Endgerät EGv bereitgestellt.

Mit Hilfe der Applikation APP wird über das Intranet IR eine Anfrage req mit der Rufnummer rn4 des die Verbindung aufbauenden Endgeräts EG4 an das Adress- bzw. Telefonbuch AB übermittelt - in der Figur 2 durch einem mit req(rn4) bezeichneten Pfeil angedeutet. In dem Adress- bzw. Telefonbuch AB wird mit Hilfe der übermittelten Rufnummer rn4 der dem anrufenden Endgerät EG4 zugeordnete Mitarbeiter M4 ermittelt und durch eine Antwort res der Applikation APP mitgeteilt werden - in der Figur 2 durch einem mit res(M4) bezeichneten Pfeil angedeutet.

Mit Hilfe der Applikation APP wird eine weitere Anfrage req mit der Information vierter Mitarbeiter M4 gebildet und an das Kalendermodul KM übermittelt - in der Figur durch einen mit req(M4) bezeichneten Pfeil gebildet. Die Anfrage req beinhaltet auch die Anfrage, ob der Mitarbeiter M4 als Teilnehmer T einer Besprechung B bekannt ist und wer Organisator O evtl. einschließlich seiner Rufnummer rn1 der Besprechung B ist - in Figur 2 durch die Bezeichnung B,O angedeutet. In dem Kalendermodul KM wird mit Hilfe der übermittelten Information vierter Mitarbeiter M4 untersucht, ob er Teilnehmer T einer bevorstehenden oder laufenden terminierten Besprechung B ist und bei einem Feststellen einer derartigen Besprechung B wird mit der Information "Besprechung B" und den weiteren Parametern S,Tb ermittelt, welche Teilnehmer T an der Besprechung B beteiligt sind und wer Organisator 0 der Besprechung B ist. Hierzu werden bekannte Suchalgorithmen eingesetzt, wobei schnelle Algorithmen bevorzugt sind, da die Verbindung v in der Vermittlungseinrichtung PBX noch gehalten wird oder sich noch im "Alerting"-Modus, d.h. im Rufzustand befindet.

Beim Ausführungsbeispiel wird mit Hilfe der Suchalgorithmen ermittelt, dass drei Teilnehmer T1..T3 an einer Besprechung B beteiligt sind und der erste Teilnehmer T1 der Besprechung B der Organisator O und dies der erste Mitarbeiter M1 des Unternehmens ist. Ist im Kalendermodul KM auch die Rufnummer rn1 des Endgeräts EG1 des ersten Mitarbeiters M1 gespeichert, so wird diese in einer Antwort res an die Applikation APP übertragen werden - in Figur 2 durch einem mit res(rn1) bezeichneten Pfeil angedeutet. Alternativ kann bei fehlender Rufnummer rn1 des ersten Mitarbeiters M1 die Information Mitarbeiter M1 in der Antwort res der Applikation APP mitgeteilt werden - in der Figur durch die Bezeichnung M1 angedeutet. In diesem Fall muss die Rufnummer rn1 des ersten Mitarbeiters M1, d.h. dem Organisator 0 der Besprechung B, durch eine erneute Anfrage req an das Adress- bzw. Telefonbuch AB mit der Information Mitarbeiter M1 ermittelt werden, wobei in der Anfrage req die Anfrage nach der Rufnummer rn des ersten Mitarbeiters M1 enthalten ist - in Figur 2 durch einem mit req (M1) bezeichneten, gestrichelten Pfeil angedeutet. Im Adress- bzw. Telefonbuch AB wird mit der Information M1 die Rufnummer rn1 des ersten Mitarbeiters M1 ermittelt und mit einer Antwort res an die Applikation APP übermittelt - in der Figur 2 durch einen mit res(rn1) bezeichneten, gestrichelten Pfeil angedeutet.

Nach Empfang der Rufnummer rn1 des ersten Mitarbeiters M1 bzw. des Organisators O wird eine vermittlungstechnische Nachricht forw mit der Rufnummer rn1 des ersten Mitarbeiters M1 gebildet und über die CSTA- Schnittstelle CSTA an die Vermittlungseinrichtung PBX übertragen. Die vermittlungstechnische Nachricht forw bewirkt in der Vermittlungseinrichtung PBX, dass die noch gehaltene bzw. sich im Zustand Alerting befindende, vom vierten Endgerät EG4 aufgebaute Verbindung v von dem virtuellen Endgerät EGv an das erste Endgerät EG1 des ersten Mitarbeiters M1 bzw. des Organisators 0 weitergeleitet wird. Vorzugsweise wird hierzu das in der Vermittlungseinrichtung PBX meist realisierte Leistungs-merkmal "Anruf weiterleiten" bzw. "Deflect Call Request" verwendet.

Nun kann der vierte Mitarbeiter M4 bzw. der zweite Teilnehmer T2 dem Organisator O der Besprechung B mitteilen, dass er aufgrund der Störung im Öffentlichen Verkehr verspätet zur Besprechung erscheinen wird oder er kann den exakten Standort S, beispielsweise Gebäude- und Raumnummer, der Besprechung B oder den genauen Beginn der Besprechung B abfragen oder er kann eine Verschiebung der evtl. bereits laufenden Besprechung B mit dem Organisator O abstimmen.

Wird nach einem Weiterleiten der Verbindung v zu einem Organisator 0 der Besprechung erkannt, dass eine Voicemail- bzw. Anrufbeantworter- Funktion aktiviert ist, oder der Organisator O die Verbindung v innerhalb einer vorgebbaren Zeitspanne nicht annimmt, kann durch die Applikation APP eine weitere Anfrage an das Telefonbuch AB um eine alternative Rufnummer rn des Organisators (z.B. Mobiltelefon) zu ermitteln oder eine weitere Anfrage req an das Kalendermodul KM mit dem Ziel eingeleitet werden, einen weiteren Teilnehmer T der Besprechung B zu ermitteln - in der Figur durch einen (*T) an dem mit req (M4,B,O) bezeichneten Pfeil angedeutet. Gemäß dem Ausführungsbeispiel wird als weiterer Teilnehmer T der Besprechung B der dritte Teilnehmer T3 bzw. die Identität bzw. Rufnummer rn5 des fünften Mitarbeiter M5 ermittelt. Diese Rufnummer rn5 wird der Applikation APP in einer Antwort res mitgeteilt - in der Figur 2 durch eine zusätzliche Bezeichnung (*rn5) an dem mit res (M1 oder rn1) bezeichneten Pfeil angedeutet. Von der Applikation APP wird in einer vermittlungstechnischen Nachricht forw die Rufnummer rn5 des fünften Mitarbeiters M5 der Vermittlungseinrichtung PBX mitgeteilt, worauf in dieser die Verbindung v an das Endgerät EG des fünften Mitarbeiters M5 weitergeleitet wird - in Figur 1 und 2 nicht dargestellt.

Mit Hilfe des erfindungsgemäßen Verfahrens kann ein Unternehmen ein zentrale Identität bzw. Rufnummer rnv einrichten, die es Mitarbeitern M des Unternehmens ermöglicht, über die zentrale Rufnummer rnv von ihrem mobilen Endgerät EG oder vom drahtgebunden Endgerät EG am Arbeitsplatz auf einfache Weise den Organisator O oder einen Teilnehmer T eines Treffens oder einer Besprechung B zu erreichen, um über eine Verspätung zu informieren oder die Besprechung kurzfristig abzusagen oder zu verschieben oder besprechungsspezifische Information, wie exakter Termin oder exakte Standortangaben wie Gebäude- oder Raumnummer abzufragen. Durch das automatische Ermitteln des Organisators 0 oder eines Teilnehmers T einer Besprechung wird zum einen eine erhebliche Zeitersparnis bewirkt und zum anderen ein erforderlicher gerätetechnischer Aufwand zum Erreichen des Organisators 0 oder eines Teilnehmers T einer Besprechung vermieden.

## Patentansprüche

1. Verfahren zum automatischen Vermitteln einer Verbindung von einem ersten zu einem zweiten Teilnehmer eines terminierten Treffens über zumindest ein Kommunikationsnetz, wobei das Kommunikationsnetz ein drahtgebundenes Kommunikationsnetz (PSTN) und/oder ein Mobilfunknetz (GSM) umfasst, wobei bei dem Verfahren
- Zuordnungen der Identität (rn) von Endgeräten (EG) des Kommunikationsnetzes (GSM,PSTN) zu endgerätezugeordneter Personeninformation (M1..Mn) in einem Adress- bzw. Telefonbuch (AB) gespeichert werden und zu jeder Personeninformation (M1 .. Mn) eines für ein Treffen vorgesehenen Teilnehmers eine terminspezifische Information (Tb,S) und eine Identität von einem Endgerät (rn) in einem Kalendermodul (KM) gespeichert wird,
- mit einem Endgerät (EG4) mit einer vorgegebenen Identität (rn4) eine Verbindung (v) zu einem virtuellen Endgerät (EGv) einer Vermittlungseinrichtung (PBX) aufgebaut und gehalten wird, die an das drahtgebundene Kommunikationsnetz (PSTN) beziehungsweise das Mobilfunknetz (GSM) angeschlossen ist,
- bei dem die Identität (rn4) des Endgeräts (EG4) in dem drahtgebundenen Kommunikationsnetz (PSTN) und/beziehungsweise in dem Mobilfunknetz (GSM) durch die Vermittlungseinrichtung (PBX) ermittelt wird,
- von dem virtuellen Endgerät (EGv) über eine CSTA- Schnittstelle (CSTA) eine Information (inf) mit der Identität (rn4) des die Verbindung (v) aufbauenden Endgeräts (EG4) an eine mit der Vermittlungseinrichtung (PBX) kommunizierende Applikation (APP) übermittelt wird,
- mit Hilfe der Applikation (APP) über ein unternehmensinternes Netz (IR), beispielsweise ein Intranet, eine Anfrage (req(rn4)) mit der Identität (rn4) des die Verbindung (v) aufbauenden Endgeräts (EG4) an das Adress- bzw. Telefonbuch (AB) übermittelt wird,
- in dem Adress- bzw. Telefonbuch (AB) mit Hilfe der übermittelten Identität (rn4) des die Verbindung (v) aufbauenden Endgeräts (EG4) die dem anrufenden Endgerät (EG4) zugeordnete Personeninformation (M4) ermittelt wird,
- mit Hilfe der Applikation (APP) eine weitere Anfrage (req) mit der dem anrufenden Endgerät (EG4) zugeordneten Personeninformation (M4) gebildet und an das Kalendermodul (KM) übermittelt wird, wobei die Anfrage (req) die Anfrage umfasst, ob die Person mit der dem anrufenden Endgerät (EG4) zugeordneten Personeninformation (M4) als Teilnehmer (T) des Treffens (B) bekannt ist und wer noch Teilnehmer (T,O) des Treffens (B) ist, wobei mit Hilfe der gespeicherten Information (M,B,O,S,Tb,rn) die Identität (rn1) des zweiten Teilnehmers (T,O) des Treffens (B) ermittelt wird,
- von dem Kalendermodul (KM) eine Antwort (res) mit der ermittelten Identität (rn1) an die Applikation (APP) übertragen wird,
- von der Applikation (APP) eine vermittlungstechnische Nachricht (forw) mit der ermittelten Identität (rn1) gebildet und über die CSTA- Schnittstelle (CSTA) an die Vermittlungseinrichtung (PBX) übertragen wird, und
- von der vermittlungstechnischen Nachricht (forw) eine Weiterleitung der gehaltenen bzw. sich im Rufzustand befindenden Verbindung (v) vom Endgerät (EG4) zum Endgerät (EG1) des zweiten Teilnehmers (O,T) des Treffens (B) mit der ermittelten Identität (rn1) in der Vermittlungseinrichtung (PBX) bewirkt wird.

2. Verfahren nach Anspruch 1, **dadurch gekennzeichnet,**
**dass** bei einer Nichterreichbarkeit des ermittelten Teilnehmers (T,O) innerhalb einer vorgegebenen Zeitspanne oder bei Feststellen einer Voicemail- Funktion beim ermittelten Teilnehmer (T,O) eine alternative Identität (rn) für den ermittelten Teilnehmer (Z,O) durch ein Abfrage (req) in dem Telefonbuch (AB) oder die Identität (rn5) eines weiteren Teilnehmers (T3) des Treffens (B) mit Hilfe der gespeicherten Information (M,B,O,S,Tb,rn) ermittelt und mit der ermittelten Identität (rn5) die Verbindung (v) vom Endgerät (EG4) an das Endgerät (EG) des weiteren Teilnehmers (T) weitergeleitet wird.

3. Verfahren nach Anspruch 1 oder 2, **dadurch gekennzeichnet,**
**dass** eine zentrale Identität (rnv) des virtuellen Endgerätes (EGv) und die Identität (rn1,rn4,rn5) der Endgeräte (EG) durch eine Rufnummer (rn) oder Rufinformation eines zeitschlitz- oder paketorientierten und drahtlosen oder drahtgebundenen Kommunikationsnetzes (GSM,PSTN) repräsentiert wird, wobei die Identifikation (rn4) des Endgeräts (EG4) im Rahmen der Verbindungssignalisierung mit Hilfe des Kommunikationsnetzes (GSM,PSTN)und die Identifikation des Endgeräts (EG1) des Teilnehmers (T,O) oder des weiteren Teilnehmers (T) des Treffens (B) mit Hilfe der gespeicherten Information (M,B,O,S,Tb,rn) ermittelt wird.

4. Verfahren nach Anspruch 3, **dadurch gekennzeichnet,**
**dass** die zentrale Identität (rnv) des virtuellen Endgerätes (EGv) durch eine zentrale Rufnummer repräsentiert wird.

5. Verfahren nach einem der vorhergehenden Ansprüche, **dadurch gekennzeichnet,**
**dass** als CSTA- Schnittstelle (CSTA) eine Programmierschnittstelle TAPI vorgesehen wird.

6. Verfahren nach Anspruch 5, **dadurch gekennzeichnet,**
**dass** die Rufnummer (rn4) des Endgeräts (EG4) durch die Vermittlungseinrichtung (PBX) im Rahmen des Verbindungsaufbaus ermittelt und dem virtuellen Endgerät (EGv) bereitgestellt wird.

7. Verfahren nach einem der vorhergehenden Ansprüche, **dadurch gekennzeichnet,**
**dass** aus der Identität (rn4) des Endgeräts (EG4) die endgerätezugeordnete Personeninformation (M4) mit Hilfe von elektronischen Adress- oder Telefonbüchern (AB) ermittelt wird.

8. Verfahren nach einem der vorhergehenden Ansprüche, **dadurch gekennzeichnet,**
**dass** aus der endgerätezugeordneten Personeninformation (M4) die terminspezifische Information (Tb,S) und Identität (rn1) über Teilnehmer (T,O) eines Treffens (B) mit Hilfe eines elektronischen Terminkalenders als Kalendermodul (KM) ermittelt wird.

9. Verfahren nach einem der Ansprüche 7 oder 8, **dadurch gekennzeichnet,**
**dass** mit Hilfe einer Applikation (APP) auf das Adress- oder Telefonbuch (AB) und/oder auf den Terminkalender (KM) zugegriffen wird.

10. Verfahren nach einem der Ansprüche 7 bis 9, **dadurch gekennzeichnet,**
**dass** über ein unternehmensinternes Netz, insbesondere ein Intranet (IR), auf das Adress- oder Telefonbuch (AB) und/oder auf den Terminkalender (KM) zugegriffen wird.

11. Verfahren nach einem der vorhergehenden Ansprüche, **dadurch gekennzeichnet,**
**dass** als Teilnehmer (t,O) des Treffens (B) der Organisator (0) des Treffens (B) ermittelt wird.

12. Kommunikationssystem zum automatischen Vermitteln einer Verbindung von einem ersten Teilnehmer zu einem zweiten Teilnehmer eines terminierten Treffens über zumindest ein drahtgebundenes Kommunikationsnetz (PSTN) und/oder ein Mobilfunknetz (GSM), mit
- einem Adress- bzw. Telefonbuch (AB) zum Speichern einer Zuordnung der Identität (rn) von Endgeräten (EG) des Kommunikationsnetzes (GSM,PSTN) zu endgerätezugeordneter Personeninformation (M1..Mn),
- einem Kalendermodul (KM) zum Speichen von zu jeder Personeninformation eines für ein Treffen vorgesehenen Teilnehmers eine terminspezifische Information (Tb,S) und eine Identität von einem Endgerät (rn),
- einem virtuellen Endgerät (EGv) einer Vermittlungseinrichtung (PBX) zum Aufbau und zum Halten einer Verbindung (v) von einem Endgerät (EG4) zum virtuellen Endgerät (EGv), wobei die Vermittlungseinrichtung (PBX) dazu eingerichtet ist, dass die Identität (rn4) des Endgeräts (EG4) in dem drahtgebundenen Kommunikationsnetz (PSTN) und/beziehungsweise dem Mobilfunknetz (GSM) ermittelt wird,
- einer CSTA- Schnittstelle (CSTA), die dazu eingerichtet ist, dass von dem virtuellen Endgerät (EGv) über die CSTA-Schnittstelle (CSTA) eine Information (inf) mit der Identität (rn4) des die Verbindung (v) aufbauenden Endgeräts (EG4) an eine mit der Vermittlungseinrichtung (PBX) kommunizierende Applikation (APP) übermittelt wird,
- einem unternehmensinternen Netz (IR), beispielsweise einem Intranet, das dazu eingerichtet ist, dass mit Hilfe der Applikation (APP) über das unternehmensinterne Netz (IR) eine Anfrage req(rn4) mit der Identität (rn4) des die Verbindung aufbauenden Endgeräts (EG4) an das Adress- bzw. Telefonbuch (AB) übermittelt wird, wobei in dem Adress- bzw. Telefonbuch (AB) mit Hilfe der übermittelten Identität (rn4) des die Verbindung (v) aufbauenden Endgeräts (EG4) die dem anrufenden Endgerät (EG4) zugeordnete Personeninformation (M4) ermittelt wird, wobei
- die Applikation (APP) dazu eingerichtet ist, dass
mit Hilfe der Applikation (APP) eine weitere Anfrage (req) mit der dem anrufenden Endgerät (EG4) zugeordneten Personeninformation (M4) gebildet und an das Kalendermodul (KM) übermittelt wird, wobei die Anfrage (req) die Anfrage umfasst, ob die Person mit der der dem anrufenden Endgerät (EG4) zugeordneten Personeninformation (M4) als Teilnehmer (T) des Treffens (B) bekannt ist und wer noch Teilnehmer (T,O) des Treffens (B) ist, wobei mit Hilfe der gespeicherten Information (M,B,O,S,Tb,rn) die Identität (rn1) des zweiten Teilnehmers (T,O) des Treffens (B) ermittelt wird,
von dem Kalendermodul (KM) eine Antwort (res) mit der ermittelten Identität (rn1) an die Applikation (APP) übertragen wird, und
von der Applikation (APP) eine vermittlungstechnische Nachricht (forw) mit der ermittelten Identität (rn1) gebildet und über die CSTA- Schnittstelle (CSTA) an die Vermittlungseinrichtung (PBX) übertragen wird, und
- die Vermittlungseinrichtung (PBX) dazu eingerichtet ist, dass von der vermittlungstechnischen Nachricht (forw) eine Weiterleitung der gehaltenen bzw. sich im Rufzustand befindenden Verbindung (v) vom Endgerät (EG4) an das Endgerät (EG1) des zweiten Teilnehmers (T,O) mit der ermittelten Identität (rn1) in der Vermittlungseinrichtung (PBX) bewirkt wird.

13. Kommunikationssystem nach Anspruch 12, **dadurch gekennzeichnet, dass** die Applikation (APP), das Adress- bzw. Telefonbuch (AB) und das Kalendermodul (KM) derart ausgestaltet sind, dass bei einer Nichterreichbarkeit des ermittelten Teilnehmers (T,O) innerhalb einer vorgegebenen Zeitspanne oder bei Feststellen einer Voicemail- Funktion beim ermittelten Teilnehmer (T,O) eine weitere Identität (rn) des Teilnehmers (T,O) oder die Identität (rn) eines weiteren Teilnehmers (T) des Treffens (B) ermittelt und mit Hilfe des Kommunikationsnetzes (GSM, PSTN) die Verbindung (v) vom Endgerät (EG4) an das Endgerät (EG) des weiteren, ermittelten Teilnehmers (T) weitergeleitet wird.

14. Kommunikationssystem nach Anspruch 12 oder 13, **dadurch gekennzeichnet,**
**dass** eine zentrale Identität (rnv) des virtuellen Endgerätes (EGv) und die Identität (rn) der Endgeräte durch eine Rufnummer (rn) oder Rufinformation eines zeitschlitz- oder paketorientierten und drahtlosen oder drahtgebundenen Kommunikationsnetzes repräsentiert ist.

15. Kommunikationssystem nach einem der Ansprüche 12 bis 14, **dadurch gekennzeichnet,**
**dass** das Kalendermodul (KM) derart ausgestaltet ist, dass als Teilnehmer (T) des Treffens (B) der Organisator (0) des Treffens (B) ermittelt wird.

## Claims

1. A method for automatically switching a connection from a first to a second participant of a scheduled meeting via at least one communication network, the communication network comprising a wired communication network (PSTN) and/or a cellular network (GSM), wherein during said method
- allocations of the identity (rn) of terminal devices (EG) of the communication network (GSM, PSTN) to terminal-specific personal information (M1..Mn) are stored in an address or telephone book (AB), and forward-specific information (Tb, S) and an identity of a terminal device (rn) are stored in a calendar module (KM) for each personal information (M1...Mn) of a participant scheduled for a meeting,
- a connection (v) to a virtual terminal device (EGv) of a switching system (PBX) is established and maintained with a terminal device (EG4) having a predetermined identity (rn4), which system is connected to the wired communication network (PSTN) or the cellular network (GSM),
- wherein the identity (rn4) of the terminal device (EG4) in the wired communication system (PSTN) and/or in the cellular network (GSM) is determined by means of the switching system (PBX),
- information (inf) having the identity (rn4) of the terminal device (EG4) establishing the connection (v) is transferred from the virtual terminal device (EGv) via a CSTA interface (CSTA) to an application (APP), which communicates with the switching system (PBX),
- a request (req(rn4)) having the identity (rn4) of the terminal device (EG4) establishing the connection(v) is transferred with the help of the application (APP) via a corporate network (IR), for example an intranet, to the address or telephone book (AB),
- the personal information (M4) associated to the requesting terminal device (EG4) is determined in the address or telephone book (AB) with the help of the transferred identity (rn4) of the terminal device (EG4) establishing the connection (v),
- a further request (req) having the personal information (M4) associated to the requesting terminal device (EG4), is created with the help of the application (APP) and transferred to the calendar module (KM), the request (req) comprising the request if the person having the personal information (M4) associated to the requesting terminal device (EG4) is known as participant (T) of the meeting (B), and who else is participant (T, 0) of the meeting (B), wherein the identity (rn1) of the second participant (T, 0) of the meeting (B) is determined with the help of the stored information (M, B, 0, S, Tb, rn),
- an answer (res) having the determined identity (rn1) is transferred from the calendar module (KM) to the application (APP),
- a forwarding message (forw) having the determined identity (rn1) is created by the application (APP) and transferred via the CSTA interface (CSTA) to the switching system (PBX), and
- a forwarding of the maintained or active connection (v) is caused in the switching system (PBX) by the forward-specific message (forw) from the terminal device (EG4) to the terminal device (EG1) of the second participant (0, T) of the meeting (B) having the determined identity (rn1).

2. The method according to claim 1, **characterized**
**in that** an alternative identity (rn) for the determined participant (Z, 0) is determined by requesting (req) the telephone book (AB), or the identity (rn5) of a further participant (T3) of the meeting (B) is determined with the help of the stored information (M, B, 0, S, Tb, rn) in case of non-accessibility of the determined participant (T, 0) within a predetermined time period or in case of determination of a voice mail function for the determined participant (T, 0), and the connection (v) is forwarded from the terminal device (EG4) to the terminal device (EG) of the further participant (T) with the determined identity (rn5).

3. The method according to claim 1 or 2, **characterized**
**in that** a central identity (rnv) of the virtual terminal device (EGv) and the identity (rn1, rn4, rn5) of the terminal devices (EG) are represented by a telephone number (rn) or calling information of a time slot- or package-orientated and wireless or wired communication network (GSM, PSTN), wherein the identification (rn4) of the terminal device (EG4) is determined within the connection signaling with the help of the communication network (GSM, PSTN), and the identification of the terminal device (EG1) of the participant (T, 0) of the further participant (T) of the meeting (B) is determined with the help of the stored information (M, B, 0, S, Tb, rn).

4. The method according to claim 3, **characterized**
**in that** the central identity (rnv) of the virtual terminal device (EGv) is represented by a central telephone number.

5. The method according to any of the previous claims, **characterized**
**in that** a programming interface TAPI is provided as CSTA interface (CSTA).

6. The method according to claim 5, **characterized**
**in that** the telephone number (rn4) of the terminal device (EG4) is determined by the switching system (PBX) within the establishment of the connection and is provided to the virtual terminal device (EGv).

7. A method according to any one of the previous claims, **characterized**
**in that** the terminal device-associated personal information (M4) is determined from the identity (rn4) of the terminal device (EG4) with the help of electronic address or telephone books (AB).

8. A method according to any of the previous claims, **characterized in that** the schedule-specific information (Tb, S) and identity (rn1) regarding participant (T, 0) of a meeting (B) are determined from the terminal device-associated personal information (M4) with the help of an electronic appointment calendar as calendar module (KM).

9. The method according to any one of claims 7 or 8, **characterized in that** the address or telephone book (AB) and/or the appointment calendar (KM) are accessed with the help of an application (APP).

10. The method according to any one of claims 7 to 9, **characterized**
**in that** the address or telephone book (AB) and/or the appointment calendar (KM) are accessed by means of a corporate network, particularly an intranet (IR).

11. A method according to any one of the previous claims, **characterized**
**in that** the organizer (0) of the meeting (B) is determined as participant (T, 0) of the meeting (B).

12. A communication system for automatic switching of a connection from a first participant to a second participant of a scheduled meeting via at least a wired communication network (PSTN) and/or a cellular network (GSM), having
- an address or telephone book (AB) for storing an association of the identity (rn) of terminal devices (EG) of the communication network (GSM, PSTN) to terminal device-associated personal information (M1...Mn),
- a calendar module (KM) for storing of schedule-specific information (Tb, S) and an identity of a terminal device (rn) for each personal information of a participant scheduled for a meeting,
- a virtual terminal device (EGv) of a switching system (PBX) for establishing and maintaining a connection (v) from a terminal device (EG4) to a virtual terminal device (EGv), the switching system (PBX) being arranged such that the identity (rn4) of the terminal device (EG4) is determined in the wired communication network (PSTN) and/or the cellular network (GSM),
- a CSTA interface (CSTA), being arranged such that information (inf) having the identity (rn4) of the terminal device (EG4) establishing the connection (v), is transferred from the virtual terminal device (EGv) via the CSTA interface (CSTA) to an application (APP) communicating with the switching system (PBX),
- a corporate network (IR), for example an intranet, which is arranged such that a request (req(rn4)) having the identity (rn4) of the terminal device (EG4) establishing the connection, is transferred with the help of the application (APP) to the address or telephone book (AB), wherein the personal information (M4) associated to the requesting terminal device (EG4) is determined in the address or telephone book (AB) with the help of the transferred identity (rn4) of the terminal device establishing the connection (v), wherein
- the application (APP) is arranged such that
a further request (req) having the personal information (M4) associated to the requesting terminal device (EG4), is created with the help of application (APP) and transferred to the calendar module (KM), the request (req) comprising the request if the person having the personal information (M4) associated to the requesting terminal device (EG4) is known as participant (T) of the meeting (B), and who else is participant (T, 0) of meeting (B), wherein the identity (rn1) of the second participant (T, 0) of the meeting (B) is determined with the help of the stored information (M, B, 0, S, Tb, rn),
an answer (res) having the determined identity (rn1) is transferred from the calendar module (KM) to the application (APP), and
a forward-specific message (forw) having the determined identity (rn1) is created by the application (APP)
and transferred via the CSTA interface (CSTA) to the switching system (PBX), and
- the switching system (PBX) is arranged such that a forwarding of the maintained or active connection (v) from the terminal device (EG4) to the terminal device (EG1) of the second participant (T, 0) having the determined identity (rn1), is caused by the forward-specific message (forw) in the switching system (PBX).

13. The communication system according to claim 12, **characterized in that** the application (APP), the address or telephone book (AB) and the calendar module (KM) are arranged such that a further identity (rn) of the participant (T, 0) or the identity (rn) of a further participant (T) of the meeting (B) is determined in case of non-accessibility of the determined participant (T, 0) within a predetermined time period or in case of determination of a voice mail function for the determined participant (T, 0), and the connection (v) is forwarded from the terminal device (EG4) to the terminal device (EG) of the further determined participant (T) with the help of the communication network (GSM, PSTN).

14. The communication system according to claim 12 or 13, **characterized**
**in that** a central identity (rnv) of the virtual terminal device (EGv) and the identity (rn) of the terminal devices are represented by a telephone number (rn) of calling information of a time slot- or package-orientated and wireless or wired communication network.

15. The communication system according to any of claims 12 to 14, **characterized**
**in that** the calendar module (KM) is arranged such that the organizer (0) of the meeting (B) is determined as participant (T) of the meeting (B).

## Revendications

1. Procédé de transmission automatique d'une liaison d'un premier à un deuxième participant à une réunion planifiée par le biais d'au moins un réseau de communication, lequel réseau de communication inclut un réseau de communication filaire (PSTN) et/ou un réseau de téléphonie mobile (GSM), procédé lors duquel
- les assignations de l'identité (rn) des terminaux (EG) du réseau de communication (GSM, PSTN) à une information personnelle assignée au terminal (M1..Mn) sont enregistrées dans un carnet d'adresses ou un répertoire téléphonique (AB), et une information spécifique à la date (Tb, S) ainsi qu'une identité d'un terminal (rn) sont enregistrées pour chaque information personnelle (M1..Mn) d'un participant prévu pour une réunion dans un module calendrier (KM),
- une liaison (v) à un terminal virtuel (EGv) d'une installation de transmission (PBX) est établie et maintenue à l'aide d'un terminal (EG4) avec une identité prédéfinie (rn4), laquelle installation est raccordée au réseau de communication filaire (PSTN) ou au réseau de téléphonie mobile (GSM),
- l'identité (rn4) du terminal (EG4) dans le réseau de communication filaire (PSTN) et/ou le réseau de téléphonie mobile (GSM) est déterminée via l'installation de transmission (PBX),
- une information (inf) avec l'identité (rn4) du terminal (EG4) établissant la liaison (v) est transmise du terminal virtuel (EGv) à une application (APP) communicant avec l'installation de transmission (PBX), via une interface CSTA (CSTA),
- une demande (req(rn4)) avec l'identité (rn4) du terminal (EG4) établissant la liaison (v) est transmise au carnet d'adresses ou au répertoire téléphonique (AB) à l'aide de l'application (APP), via un réseau interne à l'entreprise (IR), par exemple un intranet,
- l'information personnelle (M4) assignée au terminal (EG4) appelant est déterminée dans le carnet d'adresses ou le répertoire téléphonique (AB) à l'aide de l'identité (rn4) transmise du terminal (EG4) établissant la liaison (v),
- une autre demande (req) avec l'information personnelle (M4) assignée au terminal (EG4) appelant est faite à l'aide de l'application (APP) et transmise au module calendrier (KM), laquelle demande (req) comprend la demande visant à savoir si la personne avec l'information personnelle (M4) assignée au terminal (EG4) appelant est connue en tant que participant (T) à la réunion (B) et quels sont les autres participants (T, 0) à la réunion (B), l'identité (rn1) du deuxième participant (T, 0) à la réunion (B) étant déterminée à l'aide de l'information enregistrée (M, B, 0, S, Tb, rn),
- une réponse (res) avec l'identité (rn1) déterminée est transmise du module calendrier (KM) à l'application (APP),
- un message relatif à la technique de transmission (forw) avec l'identité (rn1) déterminée est créé par l'application (APP) et transmis à l'installation de transmission (PBX), via l'interface CSTA (CSTA), et
- un transfert de la liaison (v) maintenue ou en état d'appel a lieu du terminal (EG4) au terminal (EG1) du deuxième participant (0, T) à la réunion (B) avec l'identité (rn1) déterminée dans l'installation de transmission (PBX) grâce au message relatif à la technique de transmission (forw).

2. Procédé selon la revendication 1, **caractérisé en ce qu'**en cas d'impossibilité de joindre le participant (T, 0) déterminé dans un délai prédéfini ou en cas de constatation d'une fonction de messagerie vocale pour le participant (T, 0) déterminé, une identité (rn) alternative pour le participant (Z, 0) déterminé est déterminée par une demande (req) dans le répertoire téléphonique (AB) ou l'identité (rn5) d'un autre participant (T3) à la réunion (B) est déterminée à l'aide de l'information enregistrée (M, B, 0, S, Tb, rn) et la liaison (v) est transférée du terminal (EG4) au terminal (EG) de l'autre participant (T) avec l'identité (rn5) déterminée.

3. Procédé selon la revendication 1 ou 2, **caractérisé en ce qu'**une identité centrale (rnv) du terminal virtuel (EGv) et l'identité (rn1, rn4, rn5) des terminaux (EG) sont représentées par un numéro de téléphone (rn) ou une information d'appel d'un réseau de communication (GSM, PSTN) orienté intervalle de temps ou paquets et sans fil ou filaire, l'identification (rn4) du terminal (EG4) étant déterminée à l'aide du réseau de communication (GSM, PSTN) dans le cadre de la signalisation de la liaison et l'identification du terminal (EG1) du participant (T, 0) ou de l'autre participant (T) à la réunion (B) étant déterminée à l'aide de l'information enregistrée (M, B, 0, S, Tb, rn).

4. Procédé selon la revendication 3, **caractérisé en ce que** l'identité centrale (rnv) du terminal virtuel (EGv) est représentée par un numéro de téléphone central.

5. Procédé selon l'une des quelconques revendications précédentes, **caractérisé en ce qu'**une interface de programmation TAPI est prévue comme interface CSTA (CSTA).

6. Procédé selon la revendication 5, **caractérisé en ce que** le numéro de téléphone (rn4) du terminal (EG4) est déterminé par l'installation de transmission (PBX) dans le cadre de l'établissement de la liaison et mis à la disposition du terminal virtuel (EGv).

7. Procédé selon l'une des quelconques revendications précédentes, **caractérisé en ce que** l'information personnelle (M4) assignée au terminal est déterminée à partir de l'identité (rn4) du terminal (EG4) à l'aide de carnets d'adresses ou de répertoires téléphoniques (AB) électroniques.

8. Procédé selon l'une des quelconques revendications précédentes, **caractérisé en ce que** l'information spécifique à la date (Tb, S) et l'identité (rn1) concernant les participants (T, 0) à une réunion (B) sont déterminées à partir de l'information personnelle (M4) assignée au terminal à l'aide d'un agenda électronique en tant que module calendrier (KM).

9. Procédé selon l'une des quelconques revendications 7 ou 8, **caractérisé en ce que** l'accès au carnet d'adresses ou au répertoire téléphonique (AB) et/ou à l'agenda (KM) est possible à l'aide d'une application (APP).

10. Procédé selon l'une des quelconques revendications de 7 à 9, **caractérisé en ce que** l'accès au carnet d'adresses ou au répertoire téléphonique (AB) et/ou à l'agenda (KM) est possible par le biais d'un réseau interne à l'entreprise, en particulier un intranet (IR).

11. Procédé selon l'une des quelconques revendications précédentes, **caractérisé en ce que** l'organisateur (0) de la réunion (B) est déterminé comme participant (t, 0) à la réunion (B).

12. Système de communication pour la transmission automatique d'une liaison d'un premier participant à un deuxième participant à une réunion planifiée par le biais d'au moins un réseau de communication filaire (PSTN) et/ou d'un réseau de téléphonie mobile (GSM) avec
- un carnet d'adresses ou un répertoire téléphonique (AB) pour enregistrer une assignation de l'identité (rn) des terminaux (EG) du réseau de communication (GSM, PSTN) à une information personnelle (M1..Mn) assignée au terminal,
- un module calendrier (KM) pour enregistrer une information spécifique à la date (Tb, S) et une identité d'un terminal (rn) à chaque information personnelle d'un participant prévu pour une réunion,
- un terminal virtuel (EGv) d'une installation de transmission (PBX) pour l'établissement et le maintien d'une liaison (v) d'un terminal (EG4) à un terminal virtuel (EGv), l'installation de transmission (PBX) étant configurée de sorte que l'identité (rn4) du terminal (EG4) dans le réseau de communication filaire (PSTN) et/ou le réseau de téléphonie mobile (GSM) est déterminée,
- une interface CSTA (CSTA) qui est configurée de sorte qu'une information (inf) avec l'identité (rn4) du terminal (EG4) établissant la liaison (v) est transmise du terminal virtuel (EGv) à une application (APP) communicant avec l'installation de transmission (PBX), via l'interface CSTA (CSTA),
- un réseau interne à l'entreprise (IR), par exemple un intranet, qui est configuré de sorte qu'une demande req(rn4) avec l'identité (rn4) du terminal (EG4) établissant la liaison est transmise au carnet d'adresses ou au répertoire téléphonique (AB) via le réseau interne à l'entreprise à l'aide de l'application (APP), l'information personnelle (M4) assignée au terminal (EG4) appelant étant déterminée dans le carnet d'adresses ou le répertoire téléphonique (AB) à l'aide de l'identité (rn4) transmise du terminal (EG4) établissant la liaison (v),
- l'application (APP) étant configurée de sorte qu'une autre demande (req) est faite avec l'information personnelle (M4) assignée au terminal (EG4) appelant et transmise au module calendrier (KM) à l'aide de l'application (APP), laquelle demande (req) comprend la demande visant à savoir si la personne avec l'information personnelle (M4) assignée au terminal (EG4) appelant est connue en tant que participant (T) à la réunion (B) et quels sont les autres participants (T, 0) à la réunion (B), l'identité (rn1) du deuxième participant (T, 0) à la réunion (B) étant déterminée à l'aide de l'information enregistrée (M, B, 0, S, Tb, rn), qu'une réponse (res) avec l'identité (rn1) déterminée est transmise du module calendrier (KM) à l'application (APP), et qu'un message relatif à la technique de transmission (forw) avec l'identité (rn1) déterminée est créé par l'application (APP) et transmis à l'installation de transmission (PBX) via l'interface CSTA (CSTA), et
- l'installation de transmission (PBX) étant configurée de sorte qu'un transfert de la liaison (v) maintenue ou en état d'appel a lieu du terminal (EG4) au terminal (EG1) du deuxième participant (T, 0) avec l'identité (rn1) déterminée dans l'installation de transmission (PBX) grâce au message relatif à la technique de transmission (forw).

13. Système de communication selon la revendication 12, **caractérisé en ce que** l'application (APP), le carnet d'adresses ou le répertoire téléphonique (AB) ainsi que le module calendrier (KM) sont configurés de sorte qu'en cas d'impossibilité de joindre le participant (T, 0) déterminé dans un délai prédéfini ou en cas de constatation d'une fonction de messagerie vocale pour le participant (T, 0) déterminé, une autre identité (rn) du participant (T, 0) ou l'identité (rn) d'un autre participant (T) à la réunion (B) est déterminée et que la liaison (v) est transférée du terminal (EG4) au terminal (EG) de l'autre participant (T) déterminé à l'aide du réseau de communication (GSM, PSTN).

14. Système de communication selon la revendication 12 ou 13, **caractérisé en ce qu'**une identité centrale (rnv) du terminal virtuel (EGv) et l'identité (rn) des terminaux sont représentées par un numéro de téléphone (rn) ou une information d'appel d'un réseau de communication orienté intervalle de temps ou paquets et sans fil ou filaire.

15. Système de communication selon l'une des quelconques revendications de 12 à 14, **caractérisé en ce que** le module calendrier (KM) est configuré de sorte que l'organisateur (0) de la réunion (B) est déterminé comme participant (T) à la réunion (B).
